# EUROPEAN PATENT APPLICATION

(11) **EP 4 056 735 A1**
(43) Date of publication of application: **14.09.2022**
(21) Application number: 21161582.8
(22) Date of filing: 09.03.2021
(51) Int. Cl.: C25B 1/04, C25B 11/031, C25B 11/061, C25B 11/063, C25B 11/067, C25B 11/075, C25B 11/077

(54) **PROCESS FOR THE PREPARATION OF AN ELECTRODE FOR ELECTROLYTIC APPLICATIONS**

(71) Applicant: Studiengesellschaft Kohle mbH, 45470 Mülheim (DE)
(72) Inventor: TÜYSÜZ, Harun, 45470 Mülheim an der Ruhr (DE); MOON, Gun-hee, 45470 Mülheim (DE)

(57) **Abstract**

The present invention refers to a process for preparing a catalyst loaded electrode for electrochemical applications, the electrode itself and the use thereof, in particular for water electrolysis and fuel cell technology.

## Description

The present invention refers to a process for preparing a catalyst loaded electrode for electrochemical applications, the electrode itself and the use thereof, in particular for water electrolysis and fuel cell technology.

Green hydrogen that is produced from water electrolysis can provide the solution to obtain sustainable fuels by preventing the climate change as well as the emission of pollutants. The green hydrogen that is produced from water electrolysis by using sustainable electricity is still very costly. To operate water electrolysis in an economical way, it is essential to prepare the electrocatalyst and working electrode with minimizing costs.

In general, most of the protocols carried out in lab-scale experiment follow the standard procedure of; (i) the synthesis of catalysts, (ii) the dispersion of catalysts to make an ink solution, and (iii) the deposition of catalysts onto working electrode like glassy carbon electrode (GCE) or the indium-doped tin oxide (ITO) glass by drop-casting. The one step process to make the electrode, i.e., a direct synthesis of catalysts onto the conductive substrates, has been limitedly investigated for water electrolysis. For example, the in-situ generation of cobalt phosphate complex onto the ITO glass is possible by applying anodic bias, and the chemical spray pyrolysis can make thin film of Co₃O₄ and NiCo₂O₄ on CdO coated glass. Although a high catalytic activity can be achieved by following the procedure noted above, it is essential establish a low-cost process for fabrication of flexible electrode for practical and large-scale applications.

So far, several types of OER catalysts have been reported in terms of lowering the resistance of intra- and interfacial electron transfer as well as improving the long-term stability and durability. For instances, the inventor's research has focused on the electrocatalytic water-splitting with architecting well-ordered porous structure using templates or with selective control of hetero-elements incorporation. Beyond the inventor's previous studies, the more examples can be given as following; (i) the morphology, crystal phase, porosity, and size (µm to single atom level) control of catalysts, (ii) the doping, alloying, and solid solution, and (iii) the hybridization with conductive carbon or other materials.

For the water electrolysis, hydrogen evolution reaction (HER) and the oxidation evolution reaction (OER) are proceeded in cathode and anode, respectively. The electrocatalysts with zero-valent metallic forms or chalcogenide compounds are beneficial for HER, while transition metal (oxy)hydroxides and oxides which can provide a high-valent oxidation state are more suitable for OER. In alkaline condition, diverse transition metal oxides and (oxy)hydroxides including Co₃O₄, CoOOH, Fe₃O₄, NiO, NiₓFe₁₋ₓOOH etc. are commonly studied as an anode material owing to their high electrocatalytic activity and a long-term stability as well.

For the acidic water electrolysis, most of the transition metal oxides, in particular metal(oxy)hydroxides, are unstable and applying anodic bias leads to their severe dissolution. Therefore, the design and development of anode materials is considered more challenging than that of cathode at such a low pH, where the corrosion of metallic catalysts can be retarded via cathodic protection.

Amongst various metal oxides, RuO₂ and IrO₂ are known as a relatively durable electrocatalyst for acidic water electrolysis. Although both Ru and Ir are classified as noble metals, the market price of Ru is roughly 6 times cheaper than that of Ir (*roughly $58.9*/*g* of *If vs. $9.9*/*g of Ru*). To develop highly-efficient and durable ruthenium-based catalysts, the structural modification of RuO₂ has been actively carried out in terms of the introduction of additional active sites, the change of electronic structure, increasement of a surface area and porosity, etc. However, the catalysts on the basis of Ru do not fulfill the requirements for large scale industrial application and there is a need to further improve the catalytic systems.

The present inventors have found that the synthesis of electrocatalysts and the electrode preparation can be carried out in a one step process. A simple, super-fast, and eco-friendly method is developed by the inventors in order to fabricate the electrodes with a high electrocatalytic activity for water oxidation in alkaline as well as acidic electrolytes The RuO₂ nanoparticles, ruthenium molybdenum mixed oxides, and other transition metal based oxides like cobalt oxide could be prepared on the conductive carbon paper (CP) by a short heat treatment of 6 s by using a torch-gun. The obtained composite materials could be directly employed as working electrode for OER in acidic as well as basic electrolytes. The outcome and activities of the materials go beyond the state of the art of water electrolysis.

For the present invention, the inventors have merged the synthesis of electrocatalyst and the electrode preparation into one step process and developed a versatile method to synthesize ruthenium-based electrocatalysts and other metal oxides onto the conductive carbon paper (CP). Taking into account the preparation of RuO₂ supported CP as an example, very simply, the ruthenium precursor (RuCl₃·xH₂O) deposited on the CP was thermally treated by a torch-gun for just 6 s, resulting in the formation of ruthenium oxide nanoparticles (RuO₂). This can be directly used as working electrode for oxygen evolution reaction (OER) in acidic media. Compared with commercial RuO₂, the fabricated inventive electrode showed a superior electrocatalytic activity for OER in 1 M HClO₄ in terms of not only a lower overpotential to reach 10 mA/cm² (0.32 V_{RHE} vs. 0.21 V_{RHE}), but also a higher current density at 1.6 V_{RHE} (54 mA/cm² vs. 340 mA/cm²) with satisfying a long-term stability. The innovative strategy of the inventors without requiring any time-consuming and uneconomical processes can be extended to the preparation of various metal oxides as well as other conductive substrates. This provides a great potential for the variety of electrocatalytic and electrolytic applications.

Thus, the present invention is directed, in its broadest form, to a process for the preparation of a catalyst loaded electrode for electrolytic applications, comprising the steps of:
a) applying a preferably aqueous solution of a metal salt to an electrically conductive substrate;
b) optionally drying the substrate obtained in step a);
c) subjecting the substrate obtained in step a) or in step b) to a heat treatment whereby the reaction temperature and reaction time are chosen to convert the metal salt to the metal or an oxide thereof;
d) cooling the heat-treated electrode of step d) to a temperature which allows applying a binder material, if intended, and
e) optionally applying a binder material to the substrate obtained in step d) under for the binder material inert conditions to fix the metal or the oxide thereof on conductive substrate.

The application of the solution of the metal salt to the conductive substrate can be achieved by various method such as drop-casting, impregnating, spraying, dipping and the preferred method might depend on the properties of the substrate such as porosity, polarity, smoothness and similarly as well as of the kind of the solvent for the metal salt and the metal and the oxide thereof. Usually, water is preferred as solvent, but other polar organic solvents such as alcohols like methanol, ethanol, 2-propanol and glycols can be used as well.

The substrate may be any conductive substrate which allows spotting with a metal or metal oxide. Exemplarily, gold plate, fluorine-doped tin oxide (FTO) glass, stainless steel (SS) as well as carbon paper or any carbon-conductive materials such as graphite structures may be used as substrate. The substrate is further illustrated below.

In order to obtain a uniform and more dense layer of the metal salt on the substrate, the application of the solution may be followed by drying the substrate, for example, by infrared, thermal radiation or similarly, followed by a second application of the solution of the metal salt to the substrate which steps can be repeated until the desired load of the substrate is achieved.

Thus, the present invention includes a process for the preparation of an electrode for electrolytic applications as proposed before, which comprises the step of applying a solution of a metal salt to a conductive substrate after drying in step b) and optionally repeating steps a) and b) at least once before subjecting the substrate to a heat treatment in step c).

In said step c) of the inventive process, the loaded substrate is subjected to a heat treatment in order to convert the metal salt into a corresponding metal oxide or metal depending on the reaction conditions. The temperature for said conversion is quickly raised to a temperature range of 600°C to 1000°C, optionally in the presence of an inert protective gas such as nitrogen or a noble gas such as Argon, or in the presence of an oxidizing gas such as air in its most simply form. In view of the metal and the reaction conditions such as temperature, the skilled man can control the process and lead the reaction to the desired metal or metal oxide with controllable crystal phases. The heat treatment is usually carried out with a rapidly increasing temperature and a short period of time of up to 20 seconds, preferably below 10 seconds, for a dwell time for maintaining the substrate in the area of hot temperature which dwell time will be depending on the metal and on the kind of the substrate. Any types of oven or even a torch gun can be used as heat source.

Thus, the present invention is also directed to a process for the preparation of an electrode for electrolytic applications as discussed before, wherein the heat treatment of step c) is carried out in an inert or oxidizing atmosphere, preferably containing oxygen, preferably air.

The inventive process can be carried out batch-wise or continuously step after step. Thus, an application of the solution of the metal salt can be carried out in several application steps interrupted by drying steps and followed by an at least heating step which may be arranged in continuous operation optionally making use of a conveyor belt. Optionally, spraying of metal salt onto substrate can be integrated into a conveyor belt system for the continuous production.

The conductive substrate used in the process for the preparation of an electrode for electrolytic applications can be made of any material which is suitable as a conductive material for electrochemical applications. The conductive substrate may be porous, non-porous, metallic, non-metallic and/or an inorganic material.

The inventors found out that highly conductive carbon paper is particularly useful as substrate for the inventive process. When a plastic material that is excellent in terms of heat resistance, electric insulating property, chemical resistance, and the like, such as a polyimide film, is sintered/processed through a specific process at a super-high temperature of 2000°C or higher, the material changes characteristics and becomes "carbon paper", which is a carbon compound having super-thermal conductivity different from the original characteristics of the material. The carbon paper has a very excellent thermal conductivity and exhibits a degree of electric conductivity. A process for prepapring such carbon paper is described in WO2017159917, and similarly in US 10,861,617.

Though said carbon paper is preferred as substrate in view of its porosity and its conductivity, any other material can be used in the inventive process for the preparation of an electrode for electrolytic applications as long as the conductivity and catalytic activity of the metal spots or the metal oxide spots on the substrate match in their properties. The inventors have used other conductive substrates such as a gold plate, fluorine-doped tin oxide (FTO) glass, and stainless steel (SS).

The solution of the metal salt is containing a metal salt with variable concentrations, depending on the desired load. The metal salt is preferably selected from salts of the transition metals of the 4. to 6. period, preferably selected from Sc, Ti, V, Cr, Mn, Fe, Co, Ni, Cu, Zn, Y, Zr, Nb, Mo, Pt, Ru, Rh, Pd, Ag, Ta, W, Os, Ir, Pt, Au, as well as from In, Sn, Pb, Bi and any combination thereof. These metal salts can be also doped with other elements of the periodic table. As metal salt, a salt of Ruthenium such as RuCl₃ is preferred which may be deposited on the substarte and then heat-treated to be converted into RuO₂ or Ru metal depending on the reaction condictions.

Conveniently, the heat-treated electrode is cooled down to room temparature or the temperature of use. In order to better keep the metal or metal oxide on the surface of the substrate, after the heat treatment, a binder might be applied to the surface under binder-inert conditions for fixing the metal or metal oxide to the surface of the substrate after the heat-treated substrate is cooled down to a temperature which is not detrimental to the binder material. The kind of the binder is not very critical as long as the properties of the spotted substrate are not negatively changed. Polymers or copolymers may be used as binder, and exemplarily, Nafion can be used as a binder material to increase the stability of the loaded catalyst.

The invention is also directed to the electrode obtained by the inventive process and its usage for catalytic and electrocatalytic applications, in particular on the field of electrolysis and fuel cell technology.

The present invention is further illustrated by the attached Figures and the Experimental Part. In the attached Figures, the Figures show:
Fig. 1:
   (a) The schematic diagram for the preparation of catalysts loaded carbon paper (CP) electrode where deposition of RuO₂ is demonstrated as an example.
   (b) Comparison of XRD patterns for CP, Ru/CP, RuO₂/CP, and T-Ru/CP. The XRD patterns of RuO₂ were marked by the symbol, '*'. XRD confirms formation of RuO₂ after thermal treatment of 6s.
   (c) Raman spectra of commercial RuO₂ loaded Au (RuO₂/Au) and thermally-treated Ru/Au (T-Ru/Au). To increase the SERS effect, the carbon substrate was replaced by the gold. Raman further supports formation of RuO₂ phase.
   (d) Comparison of electrical conductivity of CP, Ru/CP, and T-Ru/CP and the inset demonstrates the picture of the homemade cell. This confirms conductivity and structure of CP have not been damaged with the short time of heat treatment. (e) ATR-FTIR spectra of CP, Ru/CP, and T-Ru/CP.
   (e) High resolution XPS spectra of C and Ru for Ru/CP and T-Ru/CP.
Fig. 2:
   (a) Optical image of T-Ru/CP and the inset is the picture of T-Ru/CP.
   (b) SEM image of T-Ru/CP.
   (c) FE-SEM image of the carbon surface in T-Ru/CP.
   (d-f) TEM and HR-TEM image with FFT of T-Ru/CP.
   (g) STEM image and its EDX elemental mapping of (h) carbon, (i) oxygen, and (j) ruthenium for T-Ru/CP. Electron microscopy analyses and relevant elemental mapping confirm homogenously distribution of RuO2 nanoparticles on carbon paper.
Fig. 3:
   (a) Chronopotentiometry curves fixed at 10 mA/cm²
   (b) Linear sweep voltammetry (LSV) curves of CP, Ru/CP, c-RuO₂/CP, and T-Ru/CP. Before collecting chronopotentiometry and LSV for c-RuO₂/CP and T-Ru/CP, the electrode was stabilized by chronopotentiometry.
   (c) Cyclic voltammetry curves of c-RuO₂/CP and T-Ru/CP, which are magnified in the inset where the current density of c-RuO₂/CP is multiplied by 5.
   (d) The difference of charging/discharging current densities versus scan rates of RuO₂/CP and T-Ru/CP with linear fitting.
   (e) Impedance spectroscopy collected at 1.25 V_{RHE} of RuO₂/CP and T-Ru/CP. The inset shows the equivalent circuit for modeling OER.
   (f) Comparison of Tafel plots for T-Ru/CP, c-RuO₂/CP, T-Ru/Au, T-Ru/FTO, and T-Ru/SS. The experiment was conducted as follow: H-type cell separated by Nafion membrane, 10 µmol cat. on 1 x 1 cm² carbon paper, 1 M HClO₄, and argon atmosphere. The voltage recorded by Ag/AgCI reference electrode was converted to that of reversible hydrogen electrode (RHE). In-depth electrochemical study proves high activity of RuO₂/CP electrode for water electrolysis in acidic electrolyte
Fig. 4:
   (a) Long-term durability of c-RuO₂/CP and T-Ru/CP. The inset is the photo of T-Ru/CP during electrocatalysis.
   (b) XRD patterns of T-Ru/CP before and after long-term test. The XRD patterns of RuO₂ and graphitic carbon are marked by the symbol of # and O, respectively.
   (c) High resolution XPS spectrum of Ru and C in T-Ru/CP after chronopotentiometry. The C-F peak is observed due to the Nafion.
   (d) LSV curves of T-RuₓMo_{y}/CP with a different ratio of Ru to Mo. The inset displays the current divided by mass of Ru. This indicates applicability of the protocol for the preparation of mixed metal oxides.

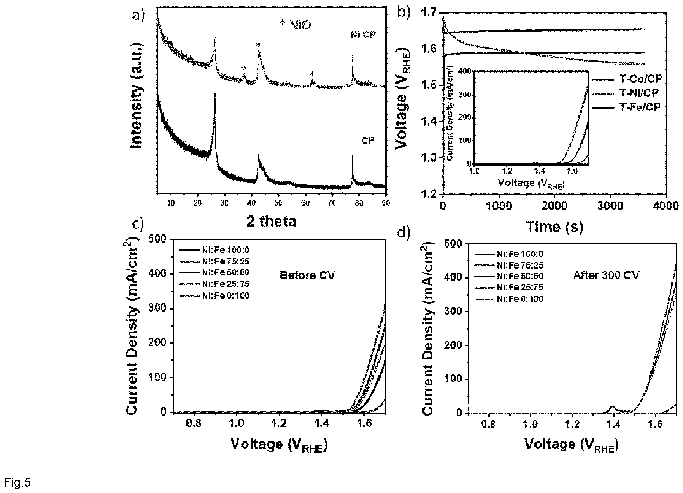

Fig. 5: Application of protocol for the preparation of metal oxides for alkaline water electrolysis
   (a) XRD pattern of NiO loaded carbon paper confirms formation of NiO crystalline phase as well as formation of small nanoparticles due to the broad reflection.
   (b) Chronopotentiomerty curves of cobalt oxide loaded carbon paper (T-Co/CP), nickel oxide loaded carbon paper (T-Ni/CP) and iron oxide loaded carbon paper (T-Fe/CP) in 1 M KOH. LSV curves were collected after chronopotentiometry at 10 mA/cm² for 1 h.

(c-d) LSV curves of mixed iron nickel oxides with a different ratio of Ni to Fe in 1 M KOH before (c) and after cyclic voltammetry (CVs) experiments and activation (d) in 1 M KOH.

### Experimental Part

### Electrode preparation

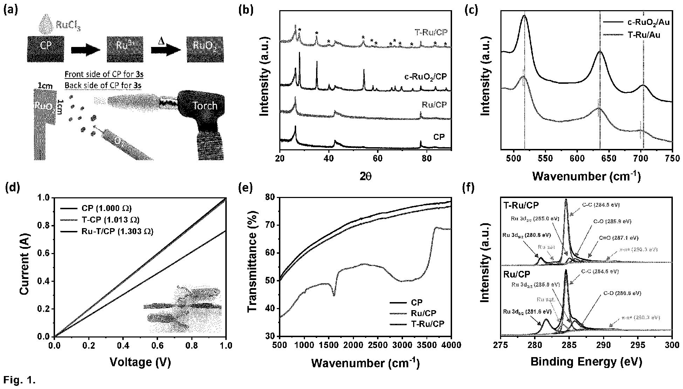

The carbon paper (Toray Carbon paper, TGP-H-60, Alfa Aesar) was cut as shown in Fig. 1a and the ink solution containing ruthenium precursor (RuCl₃·xH₂O, Aldrich) was only loaded on the square with 1 x 1 cm². To prepare the ink solution, the RuCl₃·xH₂O was added into ethanol and then was vigorously agitated for 30 s for the complete dissolution. 10 µL of ink solution was dropcasted onto the front side of carbon paper, which was dried by argon gas flow and then the same procedure was conducted for the back side (total loading of Ru: 10 µmol). For thermal treatment, the flame emitted from a commercially-available torch was directed to the selected area (i.e., 1 x 1 cm² deposited by RuCl₃·xH₂O) under oxygen gas flow for 3 s on the front and back side, respectively. The temperature was recorded to be around 700 °C. Before the electrocatalytic test in acidic media, 10 µL of Nafion solution (10 µL of Nafion^{™} 117 solution (Aldrich) + 990 µL of ethanol) was dropped onto the electrode and was dried by Ar gas flow.

To prepare the mixed oxide consisting of ruthenium and molybdenum, RuCl₃·xH₂O and molybednum chloride (MoCl₃, Alfa Aesar) with a different ratio were mixed in ethanol and sonicated for 30 min to completely dissolve MoCl₃. As a reference electrode, RuO₂ powder (99.99% trace metals basis, Aldrich) was dissolved in the solution (980 µL of EtOH + 20 µL of Nafion solution), and the amount of loading was fixed on the basis of Ru as 10 µmol. To make the metallic ruhenium onto the CP, the RuCl₃·xH₂O loaded CP was thermally treated by a lighter in air for 12 s, where the temperature was recorded around 930 °C.

For alkaline water electrolysis, cobalt, nickel and iron oxides and their mixture have been prepared starting from their nitrate precursors by following the same above-mentioned protocol.

### Characterizations

Transmission X-ray diffraction (XRD) patterns were collected by a Stoe theta/theta diffractometer in Bragg-Brentano geometry using Cu Kα_{1/2} radiation. Raman spectra regarding RuO₂ were obtained using gold substrate to amplify the intensity and the G and D bands were collected on the CP (Ocean Optics QE Pro-Raman spectrometer using an excitation wavelength of 785 nm). The relative comparison of the resistance for the electrodes was carried out using a homemade cell. The copper tape was utilized as a collector, where the width of copper tape was 4 mm and the gap between two copper tapes attached on the glass holder was 7 mm. The current-voltage curves were collected by sweeping the potential from 1 to 0 V using a power supply (2450 SourceMeter, KEITHLEY). The functional groups were confirmed by attenuated total reflectance Fourier transform infrared spectroscopy (ATR-FTIR, Nicolet Magna 560) using a diamond crystal. X-ray photoelectron spectroscopy (XPS) analysis was performed with a VG ESCALAB 220i-XL with an X-ray source using monochromatic Al Kα anode (1486.6 eV) under the operation at 63 W and 15 kV. Scanning electron microscopy (SEM) and field emission SEM (FE-SEM) images with EDX mapping were collected by a Hitachi TM-3030 microscope and a Hitachi S-3500N electron microscope, respectively. Transmission electron microscope (TEM), high resolution TEM (HR-TEM), scanning TEM (STEM) images with EDX mapping were taken with a H-7100 electron microscope (Hitachi), a HF-2000 microscope (Hitachi), and a S-5500 microscope (Hitachi), respectively.

### Electrochemical activity measurement

Electrochemical data were collected by a three-electrode system; i) a potentiostat: Biologic SP-150 potentiostat, ii) a RE: Ag/AgCl reference electrode (BASI) in 1 M HClO₄, iii) a CE: Pt wire, and iv) a WE: Toray carbon paper, gold plate, FTO glass or stainless steel loaded by catalysts. The upper part of carbon paper not containing the catalysts was fixed by using a copper clamp covered by teflon. Not to contact the copper and the carbon paper with electrolyte (*Caution: The clamp made of metal is easily corrided by the contact with 1 M HClO₄ under applying bias*.), the electrode except the region coated by catalysts was pasted by ethylen vinyl acetate, which was melted by a lighter. For acid water electrolysis, the measurement was conducted by using the H-type cell seperated by Nafion membrane (Nafion^{R} perfluorinated membrane, thickness 0.007 in., Aldrich) under continuous Ar gas purging. For the alkaline electroylsis, 1 M KOH was used as electrolyte. The chronopotentiaometry measurement was collected as a fixed current at 10 mA and the linear sweep voltammetry (LSV) curves were obtained by sweeping the potential from 0.7 to 1.6 V_{RHE} with a scan rate of 10 mV/s. Before collecting chronopotentiometry and LSV for c-RuO₂/CP and T-Ru/CP, the electrode was stabilized by chronopotentiometry. Cyclic voltammetry (CV) was performed in the potential range between 0.6 and 1.5 V_{RHE} with a scan rate of 50 mV/s. In all measurements, the IR drop was compensated at 85%.

### Experimental Results

The scheme of the universal electrode preparation is depicted in Fig. 1a. The deposition of RuO₂ will be discussed as a case study. The carbon paper (CP) anode electrode upholding RuO₂ nanoparticles was successfully prepared within just a few minutes from handling chemicals to making electrodes., After drop-casting of the Ru precursor (RuCl₃·xH₂O) ethanol-solution, CP was directly thermally-treated by using a commercial torch gun for just 6 s under oxygen gas (or air) flow (samples are labeled as Ru/CP and T-Ru/CP before and after thermal treatment, respectively). After the thermal shock treatment of 6s at temperature of around 700 °C, the color of T-Ru/CP was turned into the blue- black. The sponge-like behavior of CP was favorable to absorb ethanol, thus the Ru³⁺ was homogeneously dispersed on the entire of CP. When either the RuCl₃·xH₂O dissolved in water or the polytetrafluorethylene (PTFE)-treated CP was utilized, the surface of CP remained non-wetting by maintaining the shape of droplet. This indicates that the selection of solvents and substrates are crucial to diffuse metal ions into the carbon substrate. The advantage of this method is no need of (i) the time-consuming synthetic step of catalysts plus the fabrication of electrodes (ii) the energy intensive process such as the calcination at a high temperature for a few hours, (iii) expensive facilities and apparatus, (iv) any stabilizers and templates, etc. Furthermore, the amount of catalyst loading can be easily controlled via the decrease/increase of either the concentration of precursors or the number of drop-casting time. Furthermore, the degree of the temperature can be tuned by varying the distance between flame of a torch gun and CP.

In order to investigate the formation of RuO₂ on the CP, the X-ray diffraction (XRD) pattern was collected before and after heat treatment, and was compared with a commercial RuO₂ loaded CP (c-RuO₂/CP). As shown in Fig. 1b, the prominent reflections centered at 26.4, 42.5, and 77.6° in CP are corresponding to (002), (100), and (110) planes of graphite, respectively. In general, the sp² graphitic carbon is inclined to have a high electrical conductivity, thus it can be utilized as a substrate for electrocatalysis. From 20 to 80°, any peak stemmed from RuCl₃·xH₂O was not observed before thermal treatment. After the thermal treatment, the formation of RuO₂ with rutile phase was observed same as that of commercial RuO₂. The key difference of T-Ru/CP was the broadening of the peaks, which gives evidence on the formation of much smaller crystallite sizes. The average crystallite size estimated to be around 11 nm by using the Scherrer equation. As a rule, the carbon-based materials are not stable against the oxidative decay at high temperature under oxygen atmosphere, but the d-spacing calculated at (002) was not changed and the peak intensity was almost same before and after heat treatment. Therefore, it can be noted that heating on the selected region selectively oxidized Ru³⁺ to RuO₂ and maintained the graphitic carbon domains. This provides a good platform and opportunity for electrocatalytic applications.

As seen in Fig. 1c, Raman spectrum of T-Ru/Au also revealed the formation of RuO₂ where three peaks representing E_{g}, A_{1g}, and B_{2g} modes seen at 515, 634 and 700 cm⁻¹, respectively. In the case of c-RuO₂/Au, they were observed at 517, 636, and 704 cm⁻¹, respectively. Based on the peaks of the bulk single crystalline RuO₂, typically located at 528, 644, and 716 cm⁻¹, it was confirmed that both T-Ru/Au and c-RuO₂/Au showed a red-shift of the peak position because of either the finite size effect induced by the change of crystalline size and structural stress caused by lattice mismatch. The more red-shift in T-Ru/Au relative to c-RuO₂ is the sign for the formation of smaller particles, which matches well with the result of the XRD. The graphitic carbon materials possess G and D bands, arising from the in-plane optical vibration of aromatic carbon rings and the disorders/defects, respectively. Thus, the degree of the disorder can be inferred by the ratio of D to G band (I_{D}/I_{G}). The sharp G band was visible in CP, whose I_{D}/I_{G} was recorded around 0.53, supports good electrically-conductive of the material. The thermal treatment of CP caused the increasement of I_{D}/I_{G} and the ratio was more risen in case of T-Ru/CP. The rapid thermal shock and the oxidation of graphite can increase the degree of disorder in terms of the introduction of oxygen-containing functional groups (ex., OH, C=O, C-O, etc.), the distortion of carbon lattice, or the generation of various types of defects, ripples, and edges. Indeed, the highest value of I_{D}/I_{G} in T-Ru/CP is possibly ascribed by the interaction between carbon and RuO₂, the decomposition catalyzed by Ru, or the oxidation by Cl₂ evolved as a byproduct (i.e., 2RuCl₃·xH₂O + 2O₂ → 2RuO₂ + xH₂O + 3Cl₂). Nevertheless, the intensity of G band was still predominant relative to that of D band and the peak position of G band was not shifted at all.

The relative comparison of electrical resistance for CP, T-CP, and T-Ru/CP was performed by using a homemade cell (Fig. 1d). As the voltage was scanned from positive to negative direction, the linear current-voltage (I-V) curves were collected for all samples and the resistance was calculated from the slope of graphs (i.e., V = IR). The electrical resistance was almost same before and after heat treatment of pristine CP while it was risen up to 1.303 Ω for T-Ru/CP. Based on the correlation of Raman spectra with I-V curves, it can be postulated that the thermal treatment of CP for 6 s could alter the carbon structure (c.f., I_{D}/I_{G} = 0.69) but it did not have a profound influence on the change of electrical properties (R = 1.013 Ω). The interaction between highly conductive carbon sheets and RuO₂ nanoparticles with a higher resistivity plus the possibility of thermal combustion of CP were likely to decline the electrical conductivity in T-Ru/CP.

The attenuated total reflectance-Fourier transform infrared (ATR-FTIR) spectroscopy is one of powerful tools to confirm oxygen-containing functional groups, especially in carbon-based compounds and materials. As expected, there was no visible peak in CP and in commercial RuO₂ powder as well (Fig. 1e). The characteristic Ru-O peak of RuCl₃·xH₂O at 1585 cm⁻¹ was blue shifted and the peaks of RuCl₃·xH₂O observed in entire region except O-H stretch over 2500 - 3500 cm⁻¹ disappeared in Ru/CP, which might be attributed to the immobilization of Ru³⁺ on carbon or the complexation of Ru³⁺ with ethanol. Although it was reported that the detection of Ru-CI stretching is possible at 200 and 300 cm⁻¹, the region is out of range for the commonly used FTIR spectroscopy.

The heat treatment of Ru/CP completely removed the functional groups of RuCl₃·xH₂O, supporting that the Ru³⁺ was successfully oxidized by the rapid thermal treatment. The change of oxidation states was also confirmed by X-ray photoelectron spectroscopy (XPS). The high resolution XPS spectra of Ru and C elements for CP, Ru/CP, and T-Ru/CP are shown in Fig. 1f. As expected, the majority of C 1s spectrum is attributed to C-C bond and the peak area of C-O bond is very weak in pristine CP. Among ruthenium species, the binding energies of Ru 3d_{5/2} for metallic Ru, RuO₂, RuO₃, and RuCl₃·3H₂O are known as 279.91, 280.68, 282.38, and 282.68 eV, respectively. The lower binding energy (recorded as 281.6 eV) in Ru/CP implies the interaction between Ru³⁺ and ethanol in terms of a lower electronegativity of oxygen. By the conversion of RuCl₃ to RuO₂ in T-Ru/CP, the Ru 3d_{5/2} peak was negatively shifted and the peak position (280.8 eV) matches with the reported one. Furthermore, it was confirmed that the rapid heat treatment suppresses the formation of metallic Ru, RuO₃, or any other ruthenium species. Although the C-O (285.9 eV) and C=O (287.1 eV) groups were introduced after thermal treatment, the intensity is still quite low and the graphitic carbon (284.5 eV) is relatively well-remained in T-Ru/CP. Based on various spectroscopic data, it can be concluded that Ru³⁺ was successfully oxidized to RuO₂ and the conductive behavior of CP was maintained with 6s of the heat treatment.

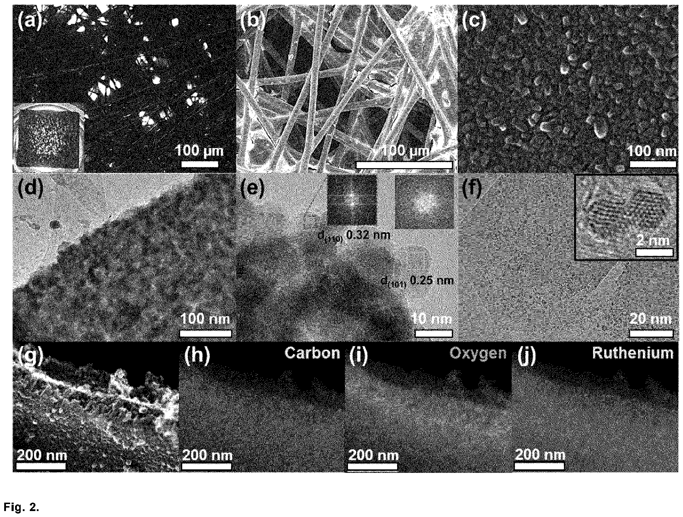

The morphology of T-Ru/CP was confirmed by optical microscope, scanning electron microscope (SEM), and transmission electron microscope (TEM) with a high resolution (HR) mode. As seen in Fig. 2a, the shape of CP resembled a non-aligned mesh woven by carbon thread. This kind of substrate is likely to be advantageous for not only upholding electrocatalysts in comparison to the flat one with a lack of pore and surface roughness but also the mass transfer in electrocatalysis. In bare CP, the surface was clean and no impurities were observed. With drop-casting of RuCl₃·xH₂O, the wood-like texture of CP disappeared as a result of the surface coating. The energy-dispersive X-ray (EDX) elemental mapping displayed that Ru and CI were homogenously dispersed over the entire CP. The heat treatment led to the formation of particles amongst the meshes (Fig. 2b) and it was observed that the surface of CP was covered by RuO₂ nanoparticles (Fig. 2c). For TEM measurement, the solution containing CP or T-Ru/CP powder was sonicated and then was loaded on the TEM grid (. As shown, the particulates that came off the CP seemed like agglomerated carbon sheets made of multilayer graphene in that the sonication caused the cleavage of the carbon.

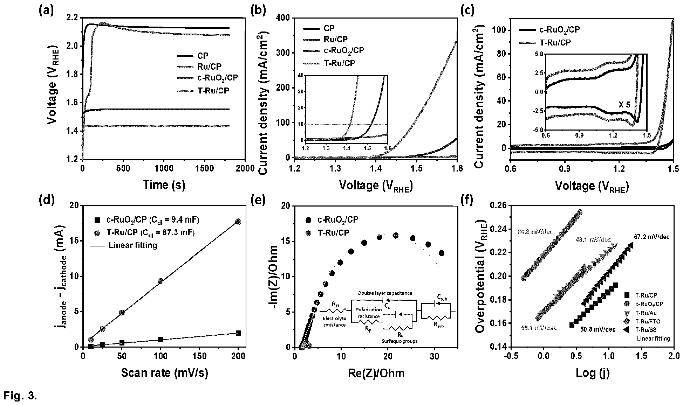

The RuO₂ nanoparticles existed in T-Ru/CP, and HR-TEM images together with fast Fourier transform (FFT) unveiled that the RuO₂ nanoparticles were aggregated, and the lattice space with 0.25 and 0.32 nm corresponded to (101) and (110) face of RuO₂, respectively (Fig. 2e and 2f). Furthermore, it was found that the nanoparticles with 2 nm were well-dispersed on some part of carbon sheets (Fig. 3f), which should be the outer side of carbon thread. And the last but not least, the scanning TEM (STEM) and its elemental EDX mapping support that Ru and O elements were uniformly distributed over the CP (Fig. 3g-j).

After the detailed structural analysis, the prepared composite materials was directly used as working electrode for OER. Depending on the composition and the stability of the catalyst, the electrochemical measurements can be conducted in acidic or alkaline electrolyte. For the case study of RuO₂, the electrocatalytic OER test was carried out in 1 M HClO₄ using H-type cell separated by Nafion membrane.. Fig. 3a demonstrates that the time-dependent voltage profile fixed at 10 mA/cm² was over 2.0 V_{RHE} for pristine CP since there is no active site to initiate 4 e⁻ transfer. Regarding Ru/CP without heat treatment, the Ru³⁺ was dissolved out when the electrode was immersed into electrolyte, thus a poor OER activity was observed. Therefore, the calcination to transform metal ions to metals or metal oxides is a prerequisite for preparation of stabile oxide catalyst for acidic water electrolysis. The voltage of c-RuO₂/CP was reduced down to 1.55 V_{RHE} and was unchanged over the time.. Very obviously, the voltage of thermally treated electrode, T-Ru/CP further decreased to around 1.44 V_{RHE}, and was remained constants over the time of the applied potential. In linear sweep voltammetry (LSV) curves, the current density of CP and Ru/CP was identical in the region below 1.6 V_{RHE} since the applied bias was not enough to initiate the homogeneous Ru³⁺-mediated water oxidation (Fig. 3b). The current density of T-Ru/CP was 340 mA/cm² at 1.6 V_{RHE}, which is over six fold higher than c-RuO₂/CP sample that delivered a current density of 54 mA/cm². The less overpotential as well as the higher current density of T-Ru/CP can be described by a few factors, mainly including (i) the formation of nanoparticles with more active sites exposed to the electrolyte, (ii) a higher electrochemical surface area and porosity, (iii) a direct electron transfer between carbon and RuO₂ instead of the electron transfer through the interlayer of Nafion binder.

As seen in Fig. 3c, the cyclic voltammetry (CV) curves show that the position of redox potentials in c-RuO₂/CP and T-Ru/CP was almost same and no new peaks were observed for T-Ru/CP. In order to understand the correlation of the electrochemical surface area with the catalytic activity, the double layer capacitance (C_{dl}) was calculated from CVs with a different scan rate in a non-Faradaic region (Fig. 3d). The rectangular shape of c-RuO₂/CP and T-Ru/CP was maintained with increasing a scan rate. A slight polarization observed in c-RuO₂/CP due to hindering the penetration of electrolytes into the surface of catalysts by Nafion. The estimated C_{dl} of c-RuO₂/CP and T-Ru/CP were 9.4 and 87.3 mF, respectively, which can expound upon the high current density of T-Ru/CP in LSV curves.

The electrochemical impedance spectroscopy (EIS) was further performed to determine the kinetics of interfacial electron transfer during water electrolysis (Fig. 3e). In Nyquist plots, the size of semicircle of T-Ru/CP was much smaller than that of c-RuO₂/CP. The equivalent circuit model developed by Doyle et. al was well-fitted (see the inset in Fig. 3e) and consequently revealed the resistance affecting the overall kinetics of OER. The R_{Ω}, R_{P}, R_{S}, and R_{sub} represent the electrolyte resistance, the polarization resistance, the resistance caused by the formation of intermediates, and the resistance of carbon substrate, respectively. Amongst them, the kinetics of the interfacial charge transfer are governed by R_{P} and R_{S}, whose values were recorded as follows: (R_{P}: 7.031 Ω in RuO₂/CP vs. 0.139 Ω in T-Ru/CP) and (R_{S}: 26.81 Ω in c-RuO₂/CP vs. 0.024 Ω in T-Ru/CP). While the R_{P} demonstrates a total charge transfer resistance closely related to the overall OER kinetics, the Rs stands for the dynamics on the formation of surface intermediates. Therefore, it is can be concluded that not only the interfacial charge transfer to water but also the formation of intermediates was favorable in T-Ru/CP, resulting in the high performance of OER.

To evaluate the feasibility of the protocol of the inventors for other substrates, the CP was replaced by different types of conductive substrates including gold plate, fluorine-doped tin oxide (FTO) glass, and stainless steel (SS) foil. The RuO₂ was easily detached out from the FTO glass right after applying bias, and the stability of RuO₂ was very poor on the SS foil due to the corrosion. Only the RuO₂ on Au showed a relatively good activity over the time, however the price of Au is much more expensive than that of Ru, thus it is not very practical for real applications. The CP with a cotton-like morphology is able to provide a higher surface area than that of other substrates with a flat surface, and its sponge-like property can stimulate to absorb the metal precursor solution.

Accordingly, the improvement of the electrocatalytic activity is achievable through tailoring morphology as well as the modification of graphitic carbon structure like the doping of hetero-elements into six-membered rings, the control of hydrophobicity/hydrophilicity, the design of well-ordered porous materials with a high surface area, etc. In order to investigate the kinetics, Tafel plots derived from the overpotential and the logarithmic current density in LSV curves were compared in Fig. 3f. The Tafel slope can be simply classified into two groups as follows: the low Tafel slope for T-Ru/CP (50.8 mV/dec) and T-Ru/Au (48.1 mV/dec) and the high Tafel slope for c-RuO₂/CP (64.3 mV/dec), T-Ru/FTO(59.1 mV/dec), and T-Ru/SS (67.2 mV/dec), which clearly supports that the selection of suitable substrates is important to optimize the OER efficiency.

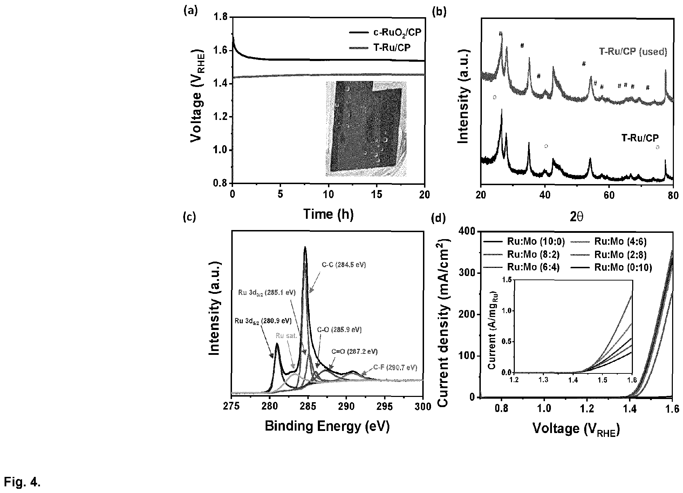

Stabilities of the prepared electrodes were further investigated by chronopotentiometry at fixed 10 mA/cm² (Fig. 4a). The voltage in both c-RuO₂/CP and T-Ru/CP was saturated and then was kept over 20 h. As seen in Figure 4a, T-Ru/CP shows an excellent stability and the thermal treatment is an essential prerequisite to retain the durability of RuO₂ in acidic condition. As a result, the XRD pattern of RuO₂ was not significantly changed before and after chronopotentiometry for 20 h. As seen in XPS spectrum of Ru in T-Ru/CP, implementation of bias for 20 h did not change the binding energy of Ru 3d_{5/2} (Fig. 4c). This indicates that RuO₂ is durable under the given experimental condition and preserve its crystal structure.

The inventors also explored the option of producing lower-cost mixed electrocatalysts through our versatile methodology by blending ruthenium and molybdenum precursors together. By varying ratios of the precursors, a series of Ru-Mo oxide could be easily prepared (see experimental section for the details). As seen in Fig. 4d, the electrocatalytic performance is slightly enhanced when the ratio of Ru to Mo (Ru:Mo, noted as T-RuₓMo_{y}/CP) was reached to 8:2, and no significant activity change is observed in the ratio of 6:4. Nevertheless, this reduces the cost of the electrocatalyst remarkably. For the sample of T-Ru_{0.6}Mo_{0.4}/CP, the overpotential fixed at 10 mA/cm² and the Tafel slope are roughly 0.21 V_{RHE} and 48.7 mV/dec, respectively, which are analogous to those of T-Ru/CP. More increasement of Mo up to 2:8 results in decrement of the electrocatalytic performance whereas pristine molybdenum oxide shows negligible OER activity under acidic conditions (Fig. 4d). The result conceptually implies that our protocol can be applied to prepare also mixed oxides and the cost of the electrode can be reduced by using mixing molybdenum with ruthenium.

As illustrated above, the inventors have successfully combined the catalyst synthesis and electrode preparation steps into one-step process. Among other compositions, the fabrication of the electrode upholding ruthenium-based oxide catalysts was successfully achieved via time-saving and cost-effective innovative protocol. The sponge-like behavior of carbon paper (CP) is favorable to absorb the RuCl₃·xH₂O solution, and the homogeneously dispersed Ru³⁺ on the CP could be turned into RuO₂ nanoparticles through thermal treatment by using a torch-gun for just 6 s. The formed composite material can be directly used as electrode for OER in acidic media. The optimized electrocatalyst goes beyond the state of the art by requesting a very low overpotential of 0.21 V_{RHE} to reach 10 mA/cm² and delivering an outstanding current density of 340 mA/cm² at 1.6 V_{RHE}. The electrode demonstrates excellent stability over 20 h of the applied electrical bias. This innovative method is also expandable to different types of conductive substrates like Au, FTO, and stainless steel and preparation of binary oxides.

The method can be also applied to prepare a range of transition metal oxides loaded substrates such as carbon paper including but not limited to cobalt oxide, nickel oxide, iron oxide and their mixtures, which can be used as directly as electrode for alkaline water electrolysis as shown in Fig.5. Remarkably, all of the mixed nickel iron oxides got activated after electrochemical measurements and deliver very high current densities. Overall, the proposed strategy is simple, time-saving, and economical and has a great potential to be applied for the roll-to-roll continuous processes for large-scale industrial applications.

## Claims

1. Process for the preparation of an electrode for electrolytic applications, comprising the steps of:
a) applying a preferably aqueous solution of a metal salt to a conductive substrate;
b) optionally drying the substrate obtained in step a);
c) subjecting the substrate obtained in step a) or in step b) to a heat treatment whereby the reaction temperature and reaction time are chosen to convert the metal salt to the metal or an oxide thereof; and
d) optionally applying a binder material to the substrate obtained in step c) under inert conditions for the binder material to fix the metal or the oxide thereof on the conductive substrate.

2. Process for the preparation of an electrode for electrolytic applications according to claim 1, comprising the step of applying a solution of a metal salt to a conductive substrate after drying in step b) and optionally repeating steps a) and b) at least once before subjecting the substrate to the heat treatment in step c).

3. Process for the preparation of an electrode for electrolytic applications according to any one of claims 1 or 2, wherein the heat treatment of step c) is carried out in an inert atmosphere or in a oxidizing atmosphere, preferably containing oxygen, preferably air.

4. Process for the preparation of an electrode for electrolytic applications according to any one of claims 1 to 3, wherein the conductive substrate is a porous, non-porous, metallic, non-metallic and/or inorganic material.

5. Process for the preparation of an electrode for electrolytic applications according to any one of claims 1 to 4 wherein the metal salt is selected from salts of the transition metals of the 4. to 6. period., preferably selected from Sc, Ti, V, Cr, Mn, Fe, Co, Ni, Cu, Zn, Y, Zr, Nb, Mo, Pt, Ru, Rh, Pd, Ag, Ta, W, Os, Ir, Pt, Au, as well as from In, Sn, Pb, Bi and combinations thereof.

6. Electrode, suitable for catalytic, electrolytic and energy conversion applications, which is obtainable according to the process according to any one of claims 1 to 5.

7. Use of the electrode as claimed in claim 6 for catalytic and electrolytic applications, in particular on the field of water electrolysis and fuel cell technology, in particular in alkaline as well as acidic conditions.
